(19) Europäisches Patentamt
European Patent Office
Office européen des brevets

(11) **EP 3 030 032 B1**

(12) **EUROPEAN PATENT SPECIFICATION**

(45) Date of publication and mention
of the grant of the patent:
**20.09.2017 Bulletin 2017/38**

(51) Int Cl.:
**H04W 72/12** *(2009.01)*     **H04W 28/06** *(2009.01)*

(21) Application number: **15192786.0**

(22) Date of filing: **29.12.2005**

(54) **METHOD AND APPARATUS FOR SIGNALING CONTROL INFORMATION OF UPLINK PACKET DATA SERVICE IN MOBILE TELECOMMUNICATION SYSTEM**

VERFAHREN UND VORRICHTUNG ZUR SIGNALISIERUNG VON STEUERUNGSINFORMATIONEN EINES UPLINK-PAKET-DATENDIENSTES EINES MOBILEN KOMMUNIKATIONSSYSTEMS

PROCÉDÉ ET APPAREIL DE SIGNALISATION D'INFORMATIONS DE COMMANDE D'UN SERVICE DE DONNÉES PAR PAQUETS EN LIAISON MONTANTE DANS UN SYSTÈME DE TÉLÉCOMMUNICATION MOBILE

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.12.2004 KR 20040116411**

(43) Date of publication of application:
**08.06.2016 Bulletin 2016/23**

(62) Document number(s) of the earlier application(s) in accordance with Art. 76 EPC:
**05028682.2 / 1 677 457**

(73) Proprietor: **Samsung Electronics Co., Ltd.**
**Gyeonggi-do 443-742 (KR)**

(72) Inventors:
- **Kim, Seong-Hun**
**Gyeonggi-do (KR)**
- **Lee, Kook-Heui**
**Gyeonggi-do (KR)**
- **Jeong, Kyeong-In**
**Gyeonggi-do (KR)**
- **Van Lieshout, Gert Jan**
**Middlesex, TW18 4QE (GB)**

(74) Representative: **Grünecker Patent- und Rechtsanwälte**
**PartG mbB**
**Leopoldstraße 4**
**80802 München (DE)**

(56) References cited:
**US-A1- 2003 039 270**

- **TSG-RAN WG2: "CR to 25.321 Introduction of Enhanced Uplink", 3GPP , 10 December 2004 (2004-12-10), XP002374436, Athens Retrieved from the Internet: URL:http://www.3gpp.org/ftp/tsg_ran/TSG_RA N/TSGR_26/Docs/PDF/RP-040497.pdf [retrieved on 2006-03-27]**

**Description**

BACKGROUND OF THE INVENTION

Field of the Invention

The present invention relates to a mobile telecommunication system in which packet data is transmitted over an uplink. More particularly, the present invention relates to a method and an apparatus for more efficiently signaling control information for the control of a packet data service in a mobile telecommunication system.

Description of the Related Art

Universal Mobile Telecommunication Service (hereinafter referred to as "UMTS"), which is a 3rd generation mobile telecommunication system based upon European mobile communication systems, that is, Global System for Mobile Communications (GSM) and General Packet Radio Services (GPRS) and employing a Wideband Code Division Multiple Access (hereinafter referred to as "WCDMA") scheme, provides uniform services which enables cellular phones or computer users to transmit packet-based texts, digitized voices or videos and multimedia data at speeds higher than 2 Mbps, no matter where the cellular phones and computer users are located.

In particular, the WCDMA telecommunication system uses an Enhanced-Uplink Dedicated Channel (hereinafter referred to as "E-DCH" or "EUDCH") in order to further improve performance of packet transmission in an uplink communication from a User Terminal (hereinafter referred to as "UE") to a Node B. That is, the E-DCH has been proposed to improve performance of uplink packet transmission in an asynchronous WCDMA telecommunication system.

A mobile telecommunication system supporting the E-DCH maximizes the efficiency of uplink packet transmission by using Node B-controlled scheduling and Hybrid Automatic Retransmission Request (hereinafter referred to as 'HARQ'). On one hand, the Node B-controlled scheduling is a technique in which UEs report information on their channel conditions and buffer statuses to a Node B, and the Node B controls uplink transmission to the UEs based on the reported information. The Node B grants mass data transmission to UEs having good channel conditions, and minimizes the amount of data transmission to UEs having bad channel conditions, thereby promoting efficient use of limited uplink radio resources. On the other hand, by performing the HARQ between a UE and a Node B, a transmission success rate is enhanced by contrast with transmission power. The Node B does not discard data packets, in which errors occur during transmission. However, the Node B performs soft combining with retransmitted data packets through the HARQ, thereby enhancing a reception success rate of data packets.

In an uplink, since mutual orthogonality is not maintained between signals transmitted from a plurality of UEs, the transmitted signals acts as interferences with each other. Thus, as the number of uplink signals received to the Node B increases, the amount of signals acting as interferences with an uplink signal transmitted by a specific UE also increases, which deteriorates reception performance of the Node B. As a result, the Node B sets limits to uplink radio resources which it can receive, while ensuring overall reception performance. Radio resources of a Node B is expressed as follows:

$$RoT = I_o / N_o \quad \text{--------------------------------------------------------------} (1)$$

where, $I_o$ denotes the total receiving wideband power spectral density of the Node B, and $N_o$ denotes a thermal noise power spectral density of the Node B. Thus, the RoT in Equation (1) becomes radio resources which the Node B needs to allocate for an E-DCH packet data service in an uplink.

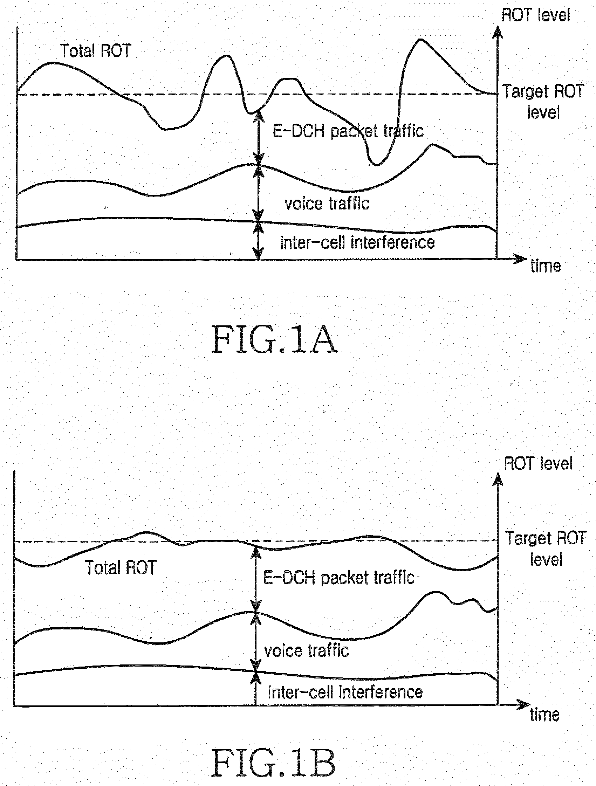

FIGs. 1A and 1B illustrate changes in uplink radio resources which a Node B can allocate, respectively.

As shown in FIGs. 1A and 1B, uplink radio resources capable of being allocated by a Node B may be represented as the sum of ICIs (Inter-cell Interferences), voice traffic and E-DCH packet traffic. FIG. 1A shows a change in the total RoT in the case of not using Node B-controlled scheduling. When a plurality of UEs simultaneously transmits packet data at high data rates, the total RoT may be in a higher level than a target RoT level, because scheduling for the E-DCH packet traffic is not provided. In this case, uplink reception performance deteriorates.

FIG. 1B shows a change in the total RoT in the case of using the Node B-controlled scheduling. When the Node B-controlled scheduling is used, Node B prevents the plurality of UEs from simultaneously transmitting packet data at high data rates. That is, at a point of time when granting a high data rate to a specific UE, the Node B-controlled scheduling grants low data rates to other UEs, thereby preventing the total RoT from increasing above the target RoT level.

If the data rate of a specific UE increases, reception power received from the specific UE to a Node B becomes larger, and thus the RoT of the UE occupies a larger fraction of the total RoT. In contrast, if the data rate of another UE is lowered, reception power received from this UE to the Node B becomes smaller. Thus, the RoT of the UE occupies a smaller fraction of the total RoT. The Node B performs the Node B-controlled scheduling for the E-DCH packet data on the basis of the relation between data rates and radio resources and in consideration of data rates requested by UEs.

The Node B notifies each UE separately of whether or not E-DCH data transmission is possible for the corresponding UE, or performs the Node B-controlled scheduling so as to coordinate E-DCH data rates according to UEs. It may be said that the Node B-controlled scheduling is an operation in which a Node B distributes the RoT to each UE based on channel conditions and buffer statuses of UEs performing E-DCH communications with the Node B.

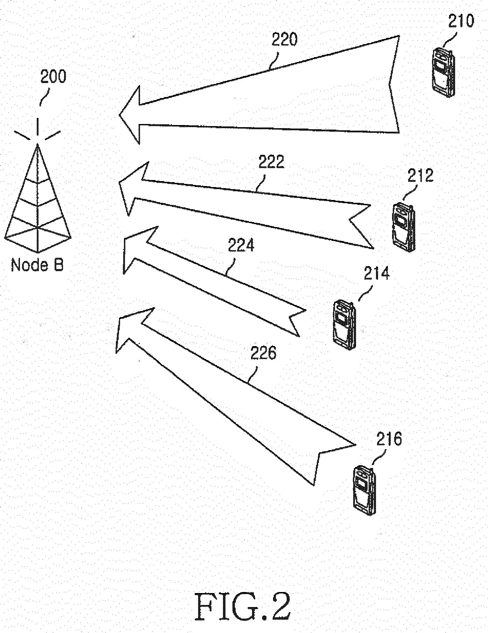

FIG. 2 illustrates a Node B and UEs performing uplink packet transmission in a mobile telecommunication system.

Referring to FIG. 2, UEs 210, 212, 214 and 216 transmit uplink packet data with different uplink channel transmission powers 220, 222, 224 and 226, according to distances from Node B 200. The UE 210 farthest from the Node B 200 transmits packet data with the highest uplink channel transmission power 220. The UE 214 nearest to the Node B 200 transmits packet data with the lowest uplink channel transmission power 224. In order to improve performance of the mobile telecommunication system, while maintaining the total RoT and not increasing ICIs with other cells, the Node B 200 may perform scheduling such that the intensity of the uplink channel transmission power is inversely proportional to a data rate. Thus, the Node B 200 efficiently maintains the total RoT by allocating a small portion of transmission resources to the UE 210 with the highest uplink channel transmission power 220, and allocating a large portion of transmission resources to the UE 214 with the lowest uplink channel transmission power 224.

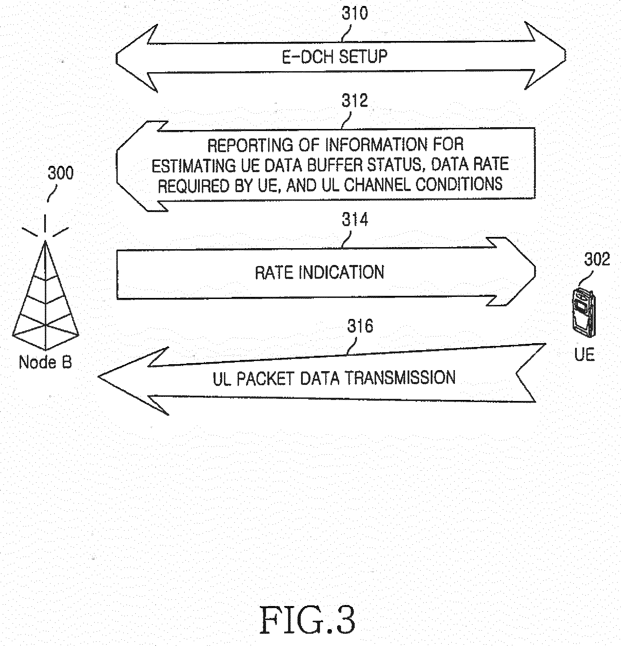

FIG. 3 illustrates an operation in which a Node B allocates transmission resources for E-DCH packet data transmission to a UE, and the UE transmits the packet data by using the allocated transmission resources.

Referring to FIG. 3, in step 310, an E-DCH is set up between a Node B 300 and a UE 302. Step 312 includes a process of transmitting/receiving messages over a dedicated transport channel. Once the E-DCH is set up, in step 312, the UE 302 transmits information on necessary transmission resources (data rate) and information on uplink channel conditions to the Node B 300. Such information includes channel condition information, such as uplink channel transmission power or transmission power margin, and buffer status information.

The Node B 300 compares uplink transmission power represented by the channel condition information with uplink reception power actually measured therein to estimate uplink channel conditions. That is, the uplink channel conditions are estimated as "good" if a difference between the uplink transmission power and the uplink reception power is small, and the uplink channel conditions are estimated as "bad" if a difference between the uplink transmission power and the uplink reception power is large. When transmission power margin is transmitted as the channel condition information, the Node B 300 subtracts the transmission power margin from a maximum possible transmission power of the UE 302, to estimate uplink transmission power. Using the estimated channel condition information and buffer status information of the UE 302, the Node B 300 determines possible transmission resources for the uplink of the UE 302.

In step 314, the determined transmission resources are notified to the UE 302. At the same time, the Node B notifies the UE 302 of transmittable data size, that is, a data rate, or usable transmission power, and the like. The UE 302 determines the size of packet data to be transmitted using the notified transmission resources and then, in step 316, transmits data of the determined size to the Node B 300. Here, one unit of packet data transmitted over the E-DCH is called a Media Access Control-enhanced Protocol Data Unit (hereinafter referred to as "MAC-e PDU).

As discussed above, information on channel conditions and buffer statuses of UEs are scheduling information, which a Node B requires in order to perform adequate scheduling for an uplink packet data service over an E-DCH. A protocol for transmitting/receiving such scheduling information over an E-DCH between a Node B and a UE is called Medium Access Control-enhanced (hereinafter referred to as "MAC-e"). In the same sense, the scheduling information is called MAC-e control information. Accordingly, there is a need for a concrete method for more efficiently signaling the MAC-e control information.

TSG-RAN WG2: "CR to 25.321 Introduction of Enhanced Uplink", 3GPP, 10 December 2004, XP002374436, Athens, disclose a MAC-e PDU with a field $DDI_0$ referring to specific DDI value that indicates that there is an SI included in the MAC-e PDU. This header will not be associated with the new MAC-es payload. With an MAC-e PDU format, according to which a SI is sent alone, $DDI_0$ is not included in the MAC-e PDU and E-TFCI value zero is used.

US 2003/039270 A1 discloses a signaling method between a MAC layer entity of a transmission apparatus and a MAC layer entity of a reception apparatus in a packet communication system including the transmission apparatus and the reception apparatus. Upon receiving a signaling request, the MAC layer entity of the transmission apparatus transmits a MAC signaling message including control information and a signaling indication indicating transmission of the control information and the MAC layer entity of the reception apparatus determines whether the MAC signaling message includes the signaling indication, and receive the control information included in the MAC signaling message, if the MAC signaling message includes the signaling indication.

SUMMARY OF THE INVENTION

An aspect of embodiments of the present invention is to address at least the above problems and/or disadvantages and to provide at least the advantages described below. Accordingly, an aspect of embodiments of the present invention is to provide a method and an apparatus for loading MAC-e control information into an MAC-e PDU and transmitting/receiving the MAC-e PDU loaded with the MAC-e control information in a mobile telecommunication system supporting an uplink packet data service.

In order to accomplish this object, in accordance with one aspect of an exemplary embodiment of the present invention, there is provided a method for transmitting scheduling information for an uplink service in a mobile telecommunication system. The method includes configuring a first MAC-e PDU including data, scheduling information, and a header related to the data and the scheduling information, when at least one uplink data and the scheduling information for the uplink service are to be transmitted. A second MAC-e PDU including the scheduling information and no header is configured, when only the scheduling information is to be transmitted. The first or second MAC-e PDU is transmitted to a Node B over an E-DCH.

In accordance with another aspect of an exemplary embodiment of the present invention, there is provided a method for receiving scheduling information for an uplink service in a mobile telecommunication system. The method includes an MAC-e PDU received over an E-DCH and a transport format received corresponding to the MAC-e PDU over a control channel related to the E-DCH. The transport format is checked for a predetermined specific value. The MAC-e PDU is divided into a header and a payload, and the payload is disassembled according to the header, if the transport format does not have the predetermined specific value. The MCA-e PDU is determined as including no header, and the scheduling information is acquired from the MAC-e PDU, if the transport format has the predetermined specific value.

In accordance with another aspect of an exemplary embodiment of the present invention, there is provided an apparatus for transmitting scheduling information for an uplink service in a mobile telecommunication system. The apparatus includes upper layer entities for selectively generating uplink data. A control unit selectively generates scheduling information for the uplink service. A configuration unit configures a first MAC-e PDU including at least one uplink data, scheduling information, and a header related to the data and the scheduling information when the data and the scheduling information are to be transmitted. A second MAC-e PDU is configured including the scheduling information and including no header when only the scheduling information is to be transmitted. A transmitter unit transmits the first or second MAC-e PDU to a Node B over an E-DCH.

In accordance with another aspect of an exemplary embodiment of the present invention, there is provided an apparatus for receiving scheduling information for an uplink service in a mobile telecommunication system. The apparatus includes a receiver unit that receives an MAC-e PDU over an E-DCH and a transport format corresponding to the MAC-e PDU over a control channel related to the E-DCH. A demultiplexer unit checks if the transport format has a predetermined specific value, divides the MAC-e PDU into a header and a payload and disassembles the payload according to the header if the transport format does not have the predetermined specific value, and determines the MCA-e PDU as including no header and acquires the scheduling information from the MAC-e PDU if the transport format has the predetermined specific value. A Node B-controlled scheduler unit schedules the uplink service according to the scheduling information.

BRIEF DESCRIPTION OF THE DRAWINGS

The above and other objects, features and advantages of certain exemplary embodiments of the present invention will be more apparent from the following description taken in conjunction with the accompanying drawings, in which:

FIG. 1A is a view illustrating a change in uplink radio resources of a Node B when Node B-controlled scheduling is not used;

FIG. 1B is a view illustrating a change in uplink radio resources of a Node B when Node B-controlled scheduling is used;

FIG. 2 is a view illustrating a Node B and UEs performing uplink packet transmission;

FIG. 3 is a view illustrating information transmitted/received between a UE and Node B in order to perform uplink packet transmission;

FIGs. 4 and 5 are schematic views illustrating structures of a UE, a Node B and a Node B controller in accordance with an exemplary embodiment of the present invention;

FIG. 6 is a schematic view illustrating a packet data structure used for an uplink packet data service in accordance with an exemplary embodiment of the present invention;

FIGs. 7A and 7B are schematic views illustrating a packet data structure including scheduling information and a header, and a packet data structure including only scheduling information in accordance with an exemplary embodiment of the present invention;

FIG. 8 is a flowchart illustrating an operation of a UE in accordance with an exemplary embodiment of the present invention;

FIG. 9 is a flowchart illustrating an operation of a UE in accordance with an exemplary embodiment of the present invention;

FIG. 10 is a flowchart illustrating an operation of a UE in accordance with an exemplary embodiment of the present invention; and

FIG. 11 is a flowchart illustrating an operation of a Node B in accordance with an exemplary embodiment of the present invention.

Throughout the drawings, the same drawing reference numerals will be understood to refer to the same elements, features and structures.

DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

One feature of exemplary embodiments of the present invention is to load control information for an uplink packet data service into an uplink packet data unit and to transmit/receive the control information as part of the uplink packet data unit in a mobile telecommunication system supporting the uplink packet data service.

Hereinafter, the uplink packet data service will be described using an E-DCH of UMTS, one of 3rd generation mobile telecommunication systems. However, the present invention is not limited to this system and standards. The 3rd generation mobile telecommunication system should be understood as all kinds of telecommunication systems to which the following description can be applied.

A UMTS Terrestrial Radio Access Network (hereinafter referred to as "UTRAN") includes Node Bs, each of which consists of a plurality of cells, and a Radio Network Controller (hereinafter referred to as "RNC") for controlling radio resources of the Node Bs and cells.

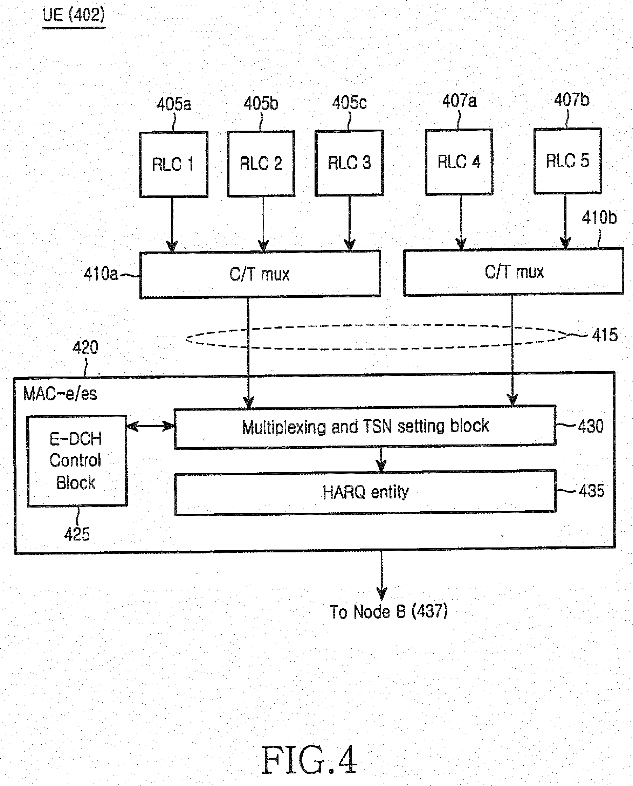

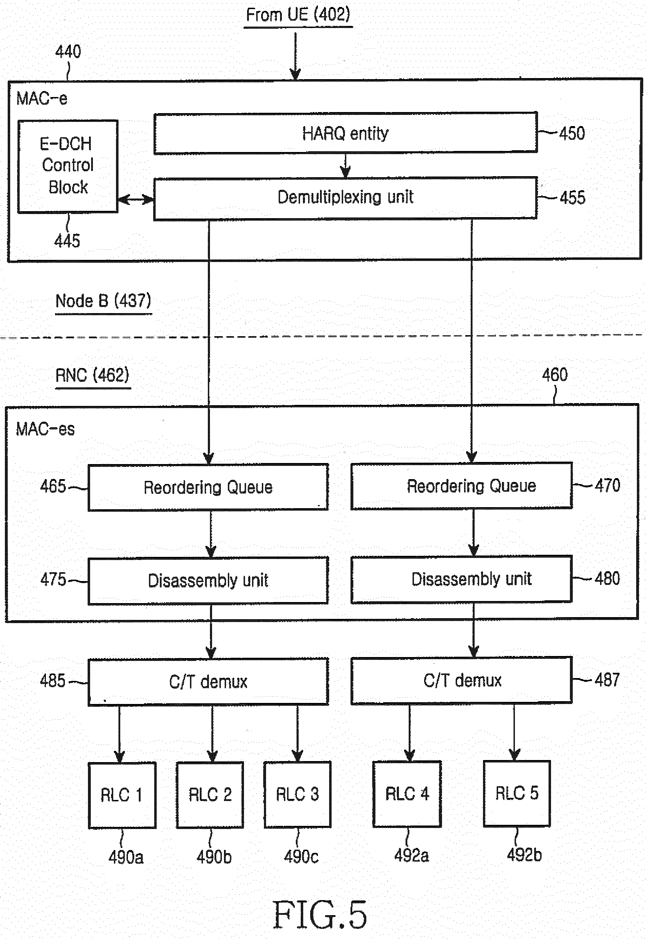

FIGs. 4 and 5 illustrate structures of a UE 402, Node B and RNC, which support an uplink packet data service, in accordance with an exemplary embodiment of the present invention.

Referring to FIG. 4, a UE 402 is provided with Radio Link Control (hereinafter referred to as "RLC") entities 405a to 405c, 407a and 407b (hereinafter collectively designated by "405" and "407"), Control and Traffic Multiplexer units (hereinafter referred to as "C/T MUX") 410a, 410b for inserting multiplexing information into data transferred from the RLC entities 405, 407, and a Media Access Control-enhanced/Serving RNC (hereinafter referred to as "MAC-e/es") layer 420 for processing the multiplexed data to generate a MAC-e PDU according to characteristics of an E-DCH and transmitting the generated MAC-e PDU.

Each of the RLC entities 405, 407 is constructed for each logical channel or radio bearer, stores data generated in an upper layer, and configures the stored data such that the data has an appropriate size for transmission in radio layers. For reference, the radio bearer is a term referring to a RLC layer and an upper layer, which are constructed for processing data of a specific application. The logical channel refers to a logical channel between the RLC layer and the upper layer. One logical channel is constructed per radio bearer.

The C/T MUX 410 inserts multiplexing information into data transferred from the RLC entities 405, 407, that is, RLC PDUs. The multiplexing information may be an identifier of a logical channel, and a Node B 437 transfers received data to an appropriate RLC entity on a receiving side with reference to the multiplexing information. The C/T MUX 410 is also called a MAC-data (hereinafter referred to as "MAC-d") layer. Data outputted from each C/T MUX 410a, 410b is called a MAC-es Service Data Unit (hereinafter referred to as "SDU"), that is, a MAC-d PDU.

A data stream output from each C/T MUX 410a, 410b is called MAC-d flows 415. The MAC-d flows 415 correspond to logical channels classified according to required Quality of Services (hereinafter referred to as "QoS"). Data of logical channels requiring the same QoS are classified into the same MAC-d flow, and the MAC-e/es layer 420 can provide specified QoS according to MAC-d flows. The QoS may be adjusted by, for example, the number of HARQ retransmissions, transmission power or the like.

The MAC-e/es layer 420 consists of an E-DCH control block 425, a multiplexing and Transmission Sequence Number (hereinafter referred to as "TSN") setting block 430, and a HARQ entity 435.

The E-DCH control block 425 generates control information related to the E-DCH, that is, MAC-e control information, and controls transmissions over the E-DCH. Scheduling information on buffer statuses or uplink transmission power belongs to the MAC-e control information. The MAC-e control information is scheduling information with reference to which Node-B-controlled scheduling is performed and transmitted through E-DCH packet data, that is, the MAC-e PDU in which it is included.

The multiplexing and TSN setting block 430 operates as a MAC-e PDU configuration unit for generating a MAC-e PDU by inserting multiplexing information and a TSN into data transferred from an upper layer, that is, the C/T MUX 410 and multiplexing the resultant data. The HARQ entity 435 controls HARQ transmission and retransmission of the E-DCH packet data. The HARQ entity 435 operates as a MAC-e transmitter unit for controlling transmission and retransmission of the MAC-e PDU, according to ACK (Acknowledge) or NACK (Non-Acknowledge) transmitted from the Node B 437.

Referring to FIG. 5, the Node B 437 includes a HARQ entity 450, a demultiplexer unit 455, and an E-DCH control block 445. The HARQ entity 450 operates as a MAC-e receiver unit for generating ACK or NACK, according to whether a MAC-e PDU received from the UE 402 is erroneous, transmitting the generated ACK or NACK to the UE 402, and combining a MAC-e PDU retransmitted from the UE 402 with the MAC-e PDU, having been previously received and buffered to then provide the combined MAC-e PDU to the demultiplexer unit 455.

The demultiplexer unit 455 separates the MAC-e PDU provided from the HARQ entity 450 into a plurality of MAC-es PDUs, each of which includes a TSN, by using a header of the MAC-e PDU. The MAC-es PDUs are then transferred to a RNC 462. At this time, if MAC-e control information is included in the MAC-e PDU, the MAC-e control information is transferred to the E-DCH control block 445 by the demultiplexer unit 455.

The E-DCH control block 445 includes a Node B scheduler (not shown in the drawing), and serves to receive the MAC-e control information and transfer the received MAC-e control information to the Node B scheduler. The Node B scheduler schedules data transmissions over the E-DCH and determines transmission resources to be granted to the UE 402 by using the MAC-e control information.

The RNC 462 includes reordering queues 465, 470, disassembly units 475, 480, C/T demultiplexer units 485, 487, and RLC entities 490a to 490c, 492a and 492b (hereinafter collectively designated by "490" and "492").

Each of the reordering queues 465, 470 is constructed for each MAC-d flow or each logical channel, and reorders the sequence of MAC-es PDUs received from the Node B 437 and stores the reordered MAC-es PDUs. At this time, the TSN inserted by the multiplexing and TSN setting block 430 is used for the sequence reordering of the MAC-es PDUs. The disassembly units 475, 480 disassemble MAC-es PDUs of each MAC-d flow into RLC PDUs. The C/T demultiplexer units 485, 487 transfer RLC PDUs of each MAC-d flow to appropriate RLC entities 490, 492. The RLC entities 490, 492 reconfigure the RLC PDUs into original upper layer data, and then transfer the data to the corresponding upper layer.

The UE, as shown in FIG. 4, has a plurality of RLC entities 405, 407, and one RLC entity corresponds to one logical channel. Also, a plurality of logical channels may correspond to one reorder queue. For example, RLC 1, RLC 2 and RLC 3 405a to 405c correspond to the reorder queue 465; and RLC 4 and RLC 5 407a, 407b correspond to the reorder queue 470.

If the Node B 437 grants uplink transmission resources to the UE 402 at a specific point of time, the UE 402 brings as much data as can be transmitted through the transmission resources from the RLC entities 405, 407, and configures and transmits a MAC-e PDU. In the multiplexing and TSN setting block 430, a MAC-e header is inserted into RLC PDUs transferred from the RLC entities 405, 407 to get a MAC-e PDU. At this time, if a sufficient space remains in an E-DCH transmitter block or MAC-e control information to be transmitted exists, the MAC-e control information is also inserted into the MAC-e PDU and is transmitted together.

When transmitting the MAC-e PDU, the UE transmits an E-TF (Enhanced Transport Format) representing the size of the MAC-e PDU over a separate physical channel other than a physical channel over which the MAC-e PDU is transmitted. The physical channel used for the transmission of the MAC-e PDU is called an E-DPDCH (Enhanced Dedicated Physical Data Channel), and the physical channel used for the transmission of the E-TF is called an E-DPCCH (Enhanced Dedicated Physical Control Channel).

The MAC-e control information is information which the Node B scheduler requires for performing scheduling. Thus, the MAC-e control information may be transmitted when the UE requests transmission resource allocation to the Node B. However, since user data such as the RLC PDU cannot be transmitted when a data rate is initially requested, the MAC-e PDU includes only the MAC-e control information. Hereinafter, a MAC-e PDU accommodating MAC-e control information, which is transmitted while the UE initially requests transmission resource allocation to the Node B, will be called an "initial rate request packet".

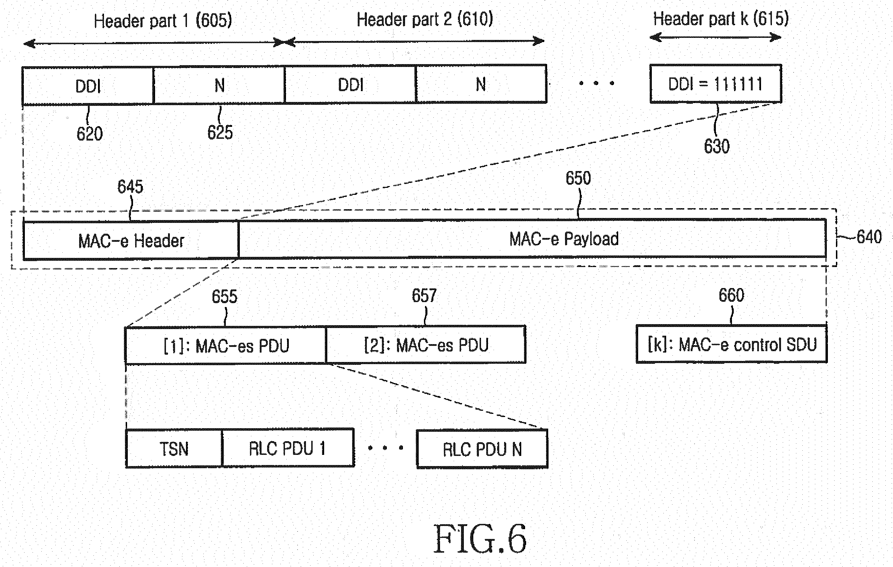

FIG. 6 illustrates a structure of a MAC-e PDU in accordance with an exemplary embodiment of the present invention.

A MAC-e PDU 640 is data transmitted over an E-DCH, and consists of a MAC-e header 645 and a MAC-e payload 650. The MAC-e payload 650 of the MAC-e PDU 640 may accommodate RLC PDUs generated in many RLC entities, and RLC PDUs generated in the same RLC entity are accommodated adjacent to each other within one MAC-e PDU. The RLC PDUs and a TSN generated in the same RLC entity constitutes a MAC-es PDU 655. The TSN is used for sequence reordering of the MAC-e PDU 655.

The MAC-e payload 650 may accommodate a plurality of MAC-es PDUs 655, 657, and the MAC-e header 645 includes multiplexing information for the MAC-es PDUs 655, 657.

The MAC-e header 645 consist of k header parts 605, 610, 615 corresponding one-to-one to k data units 655, 657, 660 included in the MAC-e payload 650 (where, k is a positive integer). Here, the preceding data units 655, 657 are MAC-es PDUs including user data of an upper layer. The last data unit 660 is a MAC-e control SDU including MAC-e control information. First two header parts 605, 610 correspond to the MAC-es PDUs 655, 657, respectively, in the order of location within the MAC-e header 645. Header part 1 605 corresponding to the MAC-e PDU 655 consists of a Data Description Identifier (hereinafter referred to as "DDI") field 620 and an N field 625. MAC-e header part 2 610 consists of a DDI field and an N field for the second MAC-es PDU 657. The N fields represent the number of PDUs included in the MAC-es PDUs 655, 657, respectively.

The DDI 620 is a logical identifier representing a combination of a logical channel, a MAC-d flow and PDU size. The MAC-es PDU 655 accommodates RLC PDUs generated in one RLC entity, and the DDI 620 represent a logical channel and a MAC-d flow to which the RLC PDUs accommodated in the MAC-es PDU 655 belong, and the size of the RLC PDUs. For example, if the MAC-es PDU 655 accommodates RLC PDUs generated in the RLC 1 405a, values representing a logical channel and a MAC-d flow corresponding to the RLC 1 405a, and the size of each PLC PDU included in the MAC-es PDU 655 are inserted into the DDI 620 of the header part 1 605.

A mapping relation between the DDI and the logical channel/MAC-d flow/RLC PDU size is determined by the RNC 462 during call setup, and is notified to the UE 402 and the Node B 437. The mapping relation between the DDI values and the logical channel/MAC-d flow/RLC PDU size is exemplified below in Table 1:

Table 1

| DDI | Logical channel ID | MAC-d flow ID | RLC PDU size |
|-----|--------------------|---------------|--------------|
| DDI 0 | LCH 1 | MAC-d flow 0 | 336 bit |
| DDI 1 | LCH 2 | MAC-d flow 0 | 336 bit |
| DDI 2 | LCH 2 | MAC-d flow 1 | 336 bit |
| DDI 3 | LCH 2 | MAC-d flow 1 | 168 bit |

The multiplexing and TSN setting block 430 of the UE 402 stores the relation information as sown in Table 1, and determines a DDI for RLC PDUs with reference to a logical channel ID when the RLC PDUs are received over the logical channel. If a plurality of DDIs correspond to the logical channel, the multiplexing and TSN setting block 430 determines the DDI with reference to the size of the received RLC PDUs. For example, if RLC PDUs having a size of 336 bits are transferred from LCH 2, the multiplexing and TSN setting block 430 configures a MAC-es PDU with the RLC PDUs, and sets a DDI corresponding to the MAC-es PDU to a value of 2. In this instance, the DDI is described as having a size of 6 bits. However, the scope of the present invention is not limited to such a value.

The N field 625 indicates the number of RLC PDUs accommodated in the MAC-es PDU 655. In this instance, the N field is described as having a size of 6 bits.

The DDI 630 of the last k header part 615 is set to a special DDI value, for example, a value of "111111" in order to represent the inclusion of MAC-e control information in the MAC-e PDU 640. The N field is not used in the last k header part 615.

A MAC-e control SDU 660 corresponding to the special DDI value accommodates a padding bit or MAC-e control information. The MAC-e control information is scheduling information with reference to which the Node B scheduler performs scheduling, and may be, for example, information on transmission power margin of a UE or buffer status information of a UE. A format of the MAC-e control SDU 660 may be appropriately defined according to system requirements. Of course, the scope of the present invention is not limited to such a format of the MAC-e control SDU 660.

As stated above, if the last DDI 630 of the MAC-e header 645 in the MAC-e PDU 640 has a special DDI value ("111111 "), a MAC-e control SDU, that is, MAC-e control information exists in the last part of the MAC-e PDU 640.

As having been already describe, the size of the MAC-e PDU is notified from the UE to the Node B by using an E-TF. The E-TF is a logical identifier which may have a size of 7 or 8 bits. One example of the relation between the E-TF and the MAC-e PDU size is given below in Table 2:

Table 2

| E-TF | MAC-e PDU size |
|------|----------------|
| 0 | 36 bits |
| 1 | 148 bits |
| 2 | 153 bits |
| 3 | 159 bits |
| ... | ... |
| 125 | 18,161 bits |
| 126 | 18,879 bits |
| 127 | 19,626 bits |

According to Table 2, E-TF 0 denotes a MAC-e PDU having a size of 36 bits, and E-TF 126 denotes a MAC-e PDU having a size of 18,879 bits.

Since one E-TF corresponds to one MAC-e PDU size, the smallest E-TF corresponds to a minimum size of the MAC-e PDU, and the greatest E-TF corresponds to the maximum size of the MAC-e PDU.

The MAC-e payload may accommodate only RLC PDUs, only MAC-e control SDU or both of the RLC PDUs and the MAC-e control SDU. Accordingly, if there is MAC-e control information to be transmitted and there is no RLC PDU to be transmitted, the UE includes only the MAC-e control information in the MAC-e PDU and then transmits the MAC-e PDU. If only the MAC-e control SDU is accommodated in the MAC-e payload, the MAC-e PDU has the minimum size. This is because the size of the MAC-e control information is significantly smaller than that of the RLC PDUs.

The size of the MAC-e control SDU is usually set to approximately maximum 30 bits. To be specific, the MAC-e control SDU may accommodate buffer status information and/or transmission power margin information. The size of the buffer status information is set to any one value of 8 to 18 bits, and the transmission power margin information has a size of 5 or 6 bits. If the MAC-e control SDU accommodates additional control information as well as the buffer status information and transmission power information, the size of the MAC-e control SDU is below 30 bits. Therefore, the following description will be given based on a MAC-e control SDU having a size of maximum 30 bits.

In contrast, the RLC PDU size is determined according to service types, and a packet data service, which can be said to be a main service of the E-DCH, principally uses a RLC PDU size of 336 or 656 bits.

In this way, the size of a MAC-e PDU accommodating only MAC-e control information is significantly smaller than those of other MAC-e PDUs (for example, MAC-e PDU accommodating RLS PDU(s)). Therefore, it is preferred, for example, that a specific E-TF is used exclusively for the MAC-e PDU accommodating only MAC-e control information. Since a MAC-e PDU accommodating only one RLC PDU has a larger size than that of the MAC-e PDU accommodating only MAC-e control information, the E-TF defined only for the MAC-e PDU accommodating only MAC-e control information may not be used for a MAC-e PDU accommodating RLC PDUs. Thus, the E-TF exclusively used for the MAC-e PDU accommodating only MAC-e control information is called a "special E-TF" in the following description. In Table 2, the E-TF 0 representing a size of 36 bits may be the special E-TF. In other words, the special E-TF is the smallest value representing the smallest MAC-e PDU size.

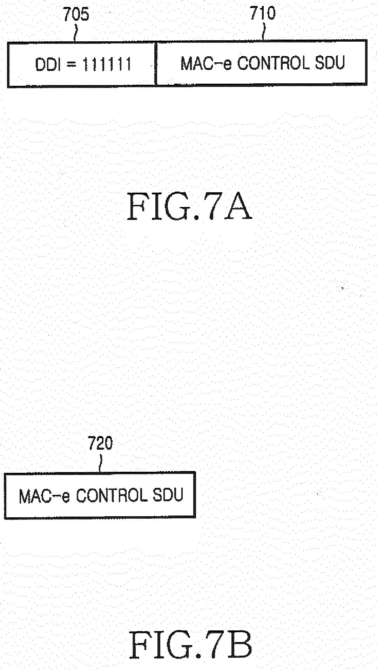

FIG. 7A illustrates a structure of a MAC-e PDU accommodating only MAC-e control information in accordance with an exemplary embodiment of the present invention.

As shown in the drawing, a MAC-e payload 710 includes only MAC-e control SDU, and a MAC-e header 705 includes only a special DDI of "111111". The overall size of the MAC-e PDU accommodating only MAC-e control information is the sum of the DDI 6 bits and MAC-e control SDU 30 bits, that is, 36 bits. Accordingly, a special E-TF is defined as representing 36 bits.

However, considering that the MAC-e PDU corresponding to the special E-TF accommodates only the MAC-e control information, and thus the MAC-e header always accommodates the same DDI value, it is unnecessary to insert the MAC-e header into the MAC-e PDU using the special E-TF. The DDI of the MAC-e header functions to determine which entity the payload is transferred. The Node B analyzes a DDI included in a MAC-e header of a received MAC-e PDU to determine whether a MAC-e payload corresponding to the DDI is a MAC-es PDU or a MAC-e control SDU. The Node B then transfers the payload to an appropriate reorder queue by using the DDI, if the payload is the MAC-es PDU or transfers the payload to the E-DCH control block 445 if the payload is the MAC-e control SDU. However, if the Node B can recognize, through other appropriate means, the fact that only the MAC-e control SDU is included in the MAC-e PDU, the MAC-e PDU need not include the DDI.

Thus, in an exemplary embodiment of the present invention, a method is proposed in which a MAC-e header is not used in a MAC-e PDU including only MAC-e control information.

FIG. 7B illustrates a structure of a MAC-e PDU including only MAC-e control information in accordance with an exemplary embodiment of the present invention. As shown in FIG. 7B, a MAC-e PDU 720 accommodates only a MAC-e control SDU, and a MAC-e header consisting of a DDI is not used. The Node B receives an E-TF corresponding to the MAC-e PDU 720 over the E-DPCCH, and uses the E-TF for determining whether the MAC-e PDU 720 accommodates only the MAC-e control SDU and no MAC-e header, or accommodates a data unit of a different type and a MAC-e header. When a MAC-e header is not inserted into a MAC-e PDU including only a MAC-e control SDU in this way, the size represented by the special E-TF is reduced to 30 bits. This size is smaller by 20 % than that represented by the smallest E-TF in Table 2, that is, 36 bits, which means that radio resources can be saved to that extent.

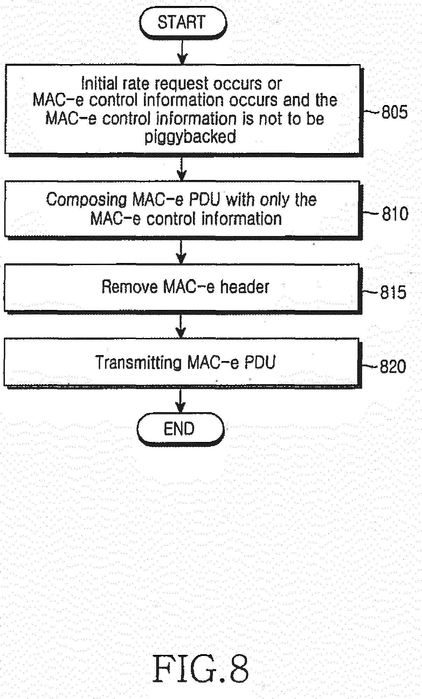

FIG. 8 is a flowchart illustrating an operation of a UE in accordance with an exemplary embodiment of the present invention.

Referring to FIG. 8, in step 805, a UE recognizes one of the following events and then goes to step 810:

Event 1: A case where an initial rate request occurs. As stated above, this is a case where a UE having no granted rate initially requests transmission resources. The initial rate request packet accommodates only a MAC-e control SDU, and the MAC-e control SDU includes scheduling information such as buffer status information and transmission power information of the UE.

Event 2: A case where a MAC-e control information cannot be transmitted together with other MAC-es PDUs. This is a case where there is no MAC-es PDU to be transmitted when the MAC-e control information occurs or uplink transmission resources is not available for transmitting the MAC-es PDU. In this case, a MAC-e PDU is configured only with a MAC-e control SDU.

In step 810, the UE configures a MAC-e PDU only with the MAC-e control SDU. The MAC-e PDU consists of a header and the MAC-e control SDU. The header consists of a DDI.

In step 815, the UE removes the header of the MAC-e PDU. Thus, the MAC-e control SDU only remains in the MAC-e PDU.

In step 820, the UE transmits the MAC-e PDU from which the header has been removed. In this context, a MAC-e PDU including a header and a MAC-e control SDU is configured, and then the header is removed to generate a MAC-e PDU to be transmitted. However, the UE may configure a MAC-e PDU including no header and consisting of only a MAC-e control SDU, and then transmit the MAC-e PDU directly according to UE manufacturers' designs. In order to represent the MAC-e PDU from which the header has been removed, a special E-TF value is transmitted over the E-DPCCH.

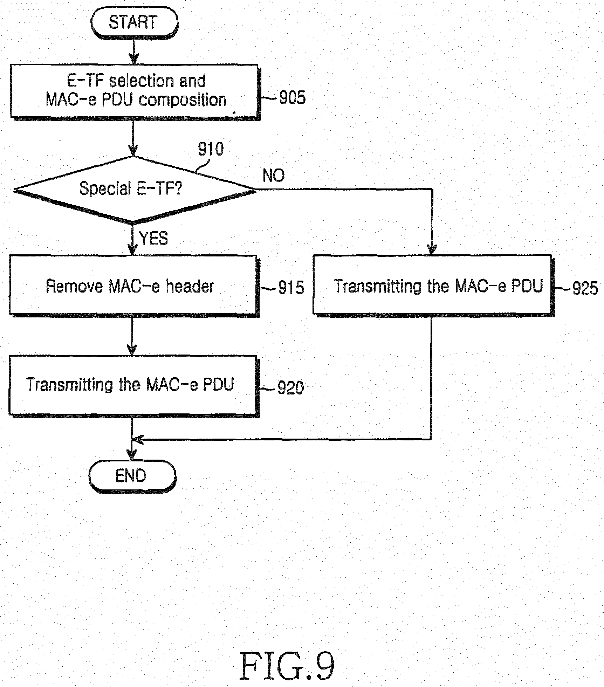

FIG. 9 is a flowchart illustrating an operation of a UE in accordance with an exemplary embodiment of the present invention. Similarly to the operation in FIG. 8, the operation in FIG. 9 also aims at transmitting a MAC-e PDU configured as shown in FIG. 7B.

Referring to FIG. 9, in step 905, a UE selects an E-TF for the E-DCH at the present point of time, and configures a MAC-e PDU to be transmitted according to the E-TF. Considering transmission resources granted from the Node B, the UE determines the size of a MAC-e PDU to be transmitted in the next transmission, and selects an E-TF representing the determined size. The MAC-e PDU is then configured according to the selected E-TF. Accordingly, the UE receives data, suitable to the size denoted by the E-TF, from the E-DCH control block or an RLC buffer, configures a MAC-es PDU or a MAC-e control SDU with the received data, and then configures a MAC-e header for the MAC-es PDU and/or the MAC-e control SDU and attaches the MAC-e header to the MAC-es PDU and/or the MAC-e control SDU.

In step 910, the UE determines whether the selected E-TF has a predetermined special E-TF value. The UE goes to step 915 if the selected E-TF has the special E-TF value, and goes to step 925 if the selected E-TF does not have the special E-TF value. If the selected E-TF has the special E-TF value, the MAC-e PDU includes only a MAC-e control SDU. In contrast, if the selected E-TF does not have the special E-TF value, the MAC-e PDU includes MAC-es PDUs and a MAC-e control SDU together, or only MAC-es PDUs.

In step 915, the UE removes the header from the configured MAC-e PDU. As a result, only the MAC-e SDU remains in the MAC-e PDU as shown n FIG. 7B. In step 920, the UE transmits the MAC-e PDU from which the header has been removed. In this context, a MAC-e PDU including a header and a MAC-e control SDU is configured, and then the header is removed to generate a MAC-e PDU to be transmitted. However, when the E-TF has the special E-TF value, the UE may configure a MAC-e PDU that includes no header and consists of only a MAC-e control SDU, and then transmit the MAC-e PDU directly according to UE manufacturers' designs. Also, in order to represent the MAC-e PDU from which the header has been removed, the special E-TF value is transmitted over the E-DPCCH.

In contrast, when the selected E-TF does not have the special E-TF, the MAC-e PDU is determined as including MAC-es PDUs and a MAC-e control SDU together, or only MAC-es PDUs. Thus, in step 925, the UE transmits the MAC-e PDU without removing the header. Also, in order to represent the MAC-e PDU, an E-TF value representing the size of the MAC-e PDU is transmitted over the E-DPCCH.

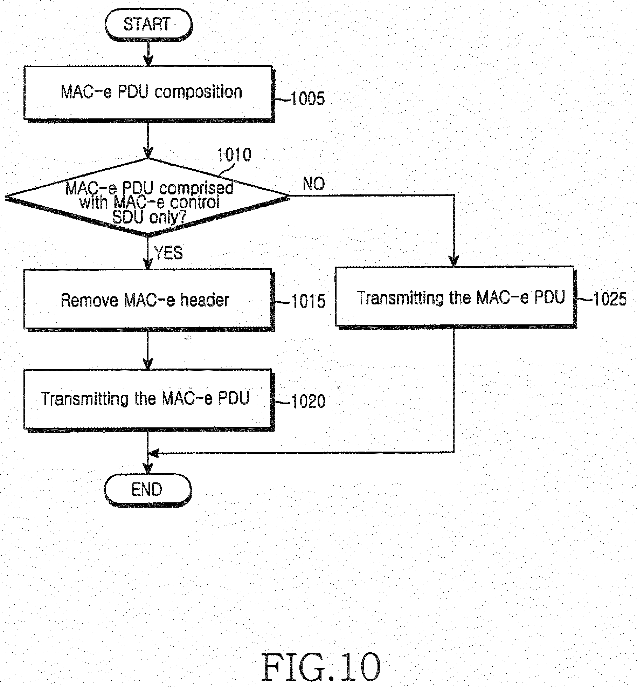

FIG. 10 is a flowchart illustrating an operation of a UE in accordance with an exemplary embodiment of the present invention. Similarly to the operations in FIGs. 8 and 9, the operation in FIG. 10 also aims at transmitting a MAC-e PDU configured as shown in FIG. 7B.

Referring to FIG. 10, in step 1005, a UE configures a MAC-e PDU to be transmitted in a next transmission period. In step 1010, the UE checks if only a MAC-e control SDU is included in the configured MAC-e PDU. The UE goes to step 1015 if only the MAC-e control SDU is included, and goes to step 1025 if MAC-es PDUs as well as the MAC-e control SDU are included.

In step 1015, the UE removes a header from the configured MAC-e PDU. In step 1020, the UE transmits the MAC-e PDU from which the header has been removed.

In step 1025, the UE transmits the configured MAC-e PDU including a header as it is.

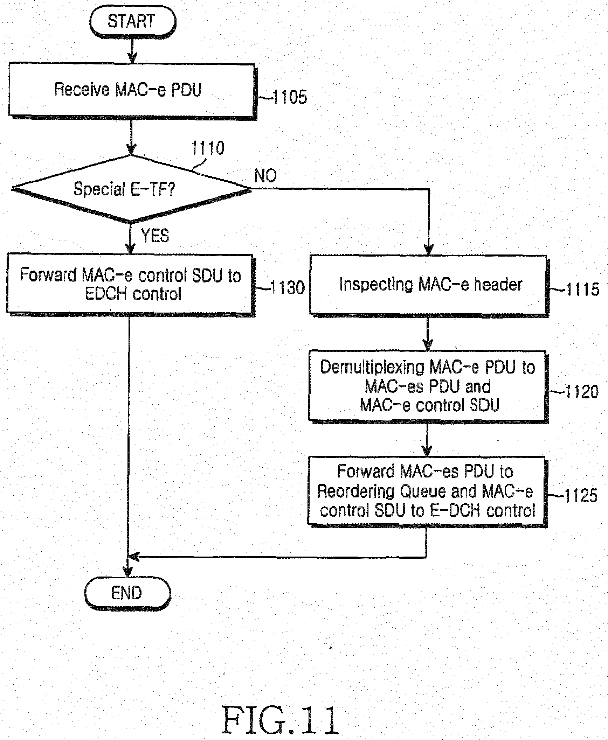

FIG. 11 is a flowchart illustrating an operation of a Node B in accordance with an exemplary embodiment of the present invention.

Referring to FIG. 11, in step 1105, a MAC-e PDU is received from a UE to a Node B over the E-DPDCH. At the same time, an E-TF corresponding to the MAC-e PDU is received from the UE to the Node B over the E-DPCCH corresponding to the E-DPDCH. In step 1110, the Node B checks if the E-TF corresponding to the MAC-e PDU has a special E-TF value. The Node B goes to step 1130 if the E-TF has the special E-TF value, and goes to step 1115 if the E-TF does not have the special E-TF.

In step 1115, the Node B checks a MAC-e header of the MAC-e PDU. Also, using DDIs and N fields of the MAC-e header, the Node B disassembles MAC-es PDUs included in a MAC-e payload of the MAC-e PDU. For example, the Node B determines the size of a MAC-es PDU corresponding to a MAC-e header part in the following manner: if the DDI of the MAC-e header part denotes a RLC PDU size of "x", a value of the N field is set to "y", and TSN size is 4 bits. The size of the MAC-es PDU corresponding to the MAC-e header part is given as "4 + x * y".

In step 1120, the Node B disassembles the MAC-e payload of the MAC-e PDU into MAC-es PDUs and a MAC-e control SDU based on k MAC-e header parts accommodated in the MAC-e header (where, k is a positive integer). Here, the MAC-e control SDU may not be included in the MAC-e PDU.

In step 1125, the Node B transfers the MAC-es PDUs to appropriate reorder queues, and transfers the MAC-e control SDU.

If the E-TF has the special E-TF value in step 1110, the Node B determines the MAC-e PDU as including no MAC-e header and consisting of only a MAC-e control SDU. The Node B omits the checking step of the MAC-e header and transfers the MAC-e control SDU included in the MAC-e PDU to the E-DCH control block in step 1130.

According to exemplary embodiments of the present invention as describe above, since header parts having the same structure are used for user data and MAC-e control information when the user data and the MAC-e control information are all transmitted, a header structure of a MAC-e PDU becomes consistent. Also, by not including a header part for a MAC-e PDU accommodating only MAC-e control information, the MAC-e control information can be concisely transmitted, which contributes to efficiently reducing the waste of radio resources.

While the invention has been shown and described with reference to certain exemplary embodiments thereof, it will be understood by those skilled in the art that various changes in form and details may be made therein without departing from the spirit and scope of the invention as defined by the appended claims.

It is feasible that there is:

a method for transmitting scheduling information for an uplink service in a mobile telecommunication system, the method comprising the steps of:

configuring a first Media Access Control-enhanced Protocol Data Unit (MAC-e PDU) that comprises data, scheduling information, and a header related to the data and the scheduling information, when at least one uplink data and the scheduling information for the uplink service are to be transmitted;

configuring a second MAC-e PDU that comprises the scheduling information and no header, when only the scheduling information is to be transmitted,; and

transmitting the first or second MAC-e PDU to a Node B over an Enhanced-Uplink Dedicated Channel (E-DCH).

It may be of advantage if:

in the step of configuring the second MAC-e PDU, the second MAC-e PDU comprising only the scheduling information is configured at an initial rate request.

In the step of configuring the second MAC-e PDU, the second MAC-e PDU comprising only the scheduling information is configured so there is no uplink data to be transmitted.

In the step of configuring the second MAC-e PDU, a Transport Format (TF) for the uplink service is selected, and the second MAC-e PDU comprising only the scheduling information is configured if the selected TF has a predetermined specific value.

The scheduling information comprises at least one of information on uplink transmission power or buffer status information of a User Terminal (UE) transmitting the uplink service.

The header of the first MAC-e PDU comprises:

at least one header part for corresponding to the uplink data and consisting of a DDI, which represents a logical channel and a Media Access Control data (MAC-d) flow related to the uplink data and data size, and an N field representing the number of data units included in the MAC-e PDU; and

a header part for corresponding to the scheduling information and consisting of a DDI, which is set to a special value representing the scheduling information.

It is further feasible that there is:

a method for receiving scheduling information for an uplink service in a mobile telecommunication system, the method comprising the steps of:

receiving an MAC-e PDU over an E-DCH and receiving a transport format corresponding to the MAC-e PDU over a control channel related to the E-DCH;

checking if the transport format has a predetermined specific value;

dividing the MAC-e PDU into a header and a payload, and disassembling the payload according to the header, if the transport format does not have the predetermined specific value; and

determining that the MCA-e PDU does not comprise a header, and acquiring the scheduling information from the MAC-e PDU, if the transport format has the predetermined specific value.

It may be of advantage if:

the scheduling information comprises at least one of information on uplink transmission power or buffer status information of a UE transmitting the uplink service.

The step of disassembling the payload comprises the steps of:

checking, among a plurality of header parts constituting the header, if a last header part comprises a DDI having a predetermined special value; and

acquiring the scheduling information from the last header part, if the DDI has the special value.

An apparatus for transmitting scheduling information for an uplink service in a mobile telecommunication system may comprise:

upper layer entities for selectively generating uplink data;

a control unit for selectively generating scheduling information for the uplink service;

a configuration unit for configuring a first MAC-e PDU comprising at least one uplink data, scheduling information, and a header related to the data and scheduling information when the data and the scheduling information are to be transmitted, and configuring a second MAC-e PDU comprising the scheduling information and no header when only the scheduling information is to be transmitted; and

a transmitter unit for transmitting the first or second MAC-e PDU to a Node B over an E-DCH.

It is of advantage if:

the configuration unit configures the second MAC-e PDU comprising only the scheduling information at an initial rate request.

The configuration unit configures the second MAC-e PDU comprising only the scheduling information so there is no uplink data to be transmitted.

The configuration unit selects a TF for the uplink service, and configures the second MAC-e PDU including only the scheduling information, if the selected TF has a predetermined specific value.

The scheduling information includes at least one of information on uplink transmission power or buffer status information of a UE transmitting the uplink service.

The header of the first MAC-e PDU comprises:

at least one header part for corresponding to the uplink data and consisting of a DDI, which represents a logical channel and a MAC-d flow related to the uplink data and data size, and an N field representing the number of data units included in the MAC-e PDU; and

a header part for corresponding to the scheduling information and consisting of a DDI, which is set to a special value representing the scheduling information.

An apparatus for receiving scheduling information for an uplink service in a mobile telecommunication system may comprise:

a receiver unit for receiving an MAC-e PDU over an E-DCH and a transport format corresponding to the MAC-e PDU over a control channel related to the E-DCH;

a demultiplexer unit for checking if the transport format has a predetermined specific value, dividing the MAC-e PDU into a header and a payload and disassembling the payload according to the header if the transport format does not have the predetermined specific value, and determining that the MCA-e PDU does not comprise a header and acquiring the scheduling information from the MAC-e PDU if the transport format has the predetermined specific value; and

a Node B-controlled scheduler unit for scheduling the uplink service according to the scheduling information.

With respect to this apparatus, it may be of advantage if:

the scheduling information includes at least one of information on uplink transmission power or buffer status information of a UE transmitting the uplink service.

The demultiplexer unit may check, among a plurality of header parts constituting the header, if a last header part comprises a DDI having a predetermined special value, and acquire the scheduling information from the last header part to provide the scheduler information to the Node B-controlled scheduler unit if the DDI has the special value.

**Claims**

1. A method for transmitting scheduling information by a user equipment (210, 212, 214, 216, 302, 402), UE, in a wireless communication system, the method comprising: configuring (910, 1010) a media access control-enhanced protocol data unit, MAC-e PDU, comprising scheduling information without a header comprising a data description identifier, DDI, if only scheduling information is to be transmitted; and transmitting (920, 1020) the MAC-e PDU to a base station on an uplink dedicated channel.

2. The method of claim 1, wherein a transport format, TF, for the MAC-e PDU is a specific format if only scheduling information is to be transmitted.

3.   The method of claim 1, wherein the scheduling information comprises at least one of uplink transmission power information and buffer status information of the UE.

4.   The method of claim 1, wherein the DDI is identification information for identifying a logical channel associated with uplink data.

5.   The method of claim 1, further comprising configuring a MAC-e PDU comprising uplink data, the scheduling information, and the header, if both the uplink data and the scheduling information are to be transmitted.

6.   A user equipment (210, 212, 214, 216, 302, 402), UE, for transmitting scheduling information in a wireless communication system, the UE comprising:

a transmitter configured to transmit a signal, **characterized in that** said UE further comprises
a controller configured to control configuring a media access control-enhanced protocol data unit, MAC-e PDU, comprising scheduling information without a header comprising a data description identifier, DDI, if only scheduling information is to be transmitted, and transmitting the MAC-e PDU to a base station on an uplink dedicated channel.

7.   The UE of claim 6 adapted to operate according to any one of claim 2 to claim 5.

8.   A method for receiving scheduling information by a base station (200, 300) in a wireless communication system, the method comprising:

receiving (1105), on an uplink dedicated channel, a media access control-enhanced protocol data unit, MAC-e PDU, comprising scheduling information without a header comprising a data description identifier, DDI, if only scheduling information is transmitted from a user equipment, UE; and
obtaining the scheduling information from the MAC-e PDU.

9.   The method of claim 8, wherein a transport format, TF, for the MAC-e PDU is a specific format if only scheduling information is transmitted from the UE.

10.   The method of claim 8, wherein the scheduling information comprises at least one of uplink transmission power information and buffer status information of the UE.

11.   The method of claim 8, wherein the DDI is identification information for identifying a logical channel associated with uplink data.

12.   The method of claim 8, further comprising receiving a MAC-e PDU comprising uplink data, the scheduling information, and the header, if both the uplink data and the scheduling information are transmitted from the UE.

13.   A base station (200, 300) for receiving scheduling information in a wireless communication system, the base station comprising:

a receiver configured to receive a signal; **characterized in that** said base station further comprises
a controller configured to control receiving, on an uplink dedicated channel, a media access control-enhanced protocol data unit, MAC-e PDU, comprising scheduling information without a header comprising a data description identifier, DDI, if only scheduling information is transmitted from a user equipment, UE, and obtaining the scheduling information from the MAC-e PDU.

14.   The base station of claim 13 adapted to operate according to any one of claim 9 to claim 12.

**Patentansprüche**

1.   Verfahren zum Übermitteln von Scheduling-Information durch ein Benutzerendgerät (210, 212, 214, 216, 302, 402), UE, in einem mobilen Kommunikationssystem, wobei das Verfahren aufweist:

Konfigurieren (910, 1010) einer ersten MAC-e PDU (Media Access Control-enhanced Protocol Data Unit), die Scheduling-Information ohne einen Header mit einem DDI (Datenbeschreibungsidentifizierer) aufweist, falls nur Scheduling-Information zu übertragen ist; und

Übertragen (920, 1020) der MAC-e PDU an eine Basisstation auf einem dedizierten Uplink-Kanal.

2. Verfahren nach Anspruch 1, wobei ein Transportformat, TF, für die MAC-e PDU ein spezifisches Format ist, falls nur Scheduling-Information zu übertragen ist.

3. Verfahren nach Anspruch 1, wobei die Scheduling-Information wenigstens eine von Uplink-Übertragungsleistungsinformation oder Bufferstatusinformation der UE ist.

4. Verfahren nach Anspruch 1, wobei die DDI Identifikationsinformationen zum Identifizieren eines mit den Uplink-Daten assoziierten logischen Kanals ist.

5. Verfahren nach Anspruch 1, welches weiterhin ein Konfigurieren eines MAC-e PDU mit Uplink-Daten, der Scheduling-Information und dem Header umfasst, falls sowohl Uplink-Daten als auch Scheduling-Information zu übertragen sind.

6. Benutzerendgerät (210, 212, 214, 216, 302, 402), UE, zum Übertragen von Scheduling-Information in einem mobilen Kommunikationssystem, wobei das UE aufweist:

einen Transmitter zum Übermitteln eines Signals,

**dadurch gekennzeichnet, dass**
das UE weiterhin aufweist:

eine Steuerungseinrichtung, ausgebildet zur Steuerung der Konfigurierung einer MAC-e PDU (Media Access Control-enhanced Protocol Data Unit) mit Scheduling-Information ohne einen Header mit Datenbeschreibungsidentifizierer, DDI, falls nur Scheduling-Information zu übertragen ist, und zum Übertragen der MAC-e PDU an eine Basisstation auf einem dedizierten Uplink-Kanal.

7. Die UE nach Anspruch 6, gebildet zur Tätigkeit gemäß einem der Ansprüche 2 bis 5.

8. Verfahren zum Empfang von Scheduling-Information durch eine Basisstation (200, 300) in einem mobilen Kommunikationssystem, wobei das Verfahren aufweist:

Empfangen (1105) auf einem dedizierten Uplink-Kanal einer MAC-e PDU (Media Access Control-enhanced Protocol Data Unit) mit Scheduling-Information ohne einen Header mit einem Datenbeschreibungsidentifizierer, DDI, falls nur Scheduling-Information von einem Benutzerendgerät, UE, übertragen wird, und

Erhalten der Scheduling-Information von der MAC-e PDU.

9. Verfahren nach Anspruch 8, wobei ein Transportformat, TF, für die MAC-e PDU ein spezifisches Format ist, falls nur Scheduling-Information von der UE übertragen wird.

10. Verfahren nach Anspruch 8, wobei die Scheduling-Information wenigstens eine von Uplink-Übertragungsleistungsinformation und Bufferstatusinformation der UE ist.

11. Verfahren nach Anspruch 8, wobei die DDI Identifikationsinformation zum Identifizieren eines logischen Kanals ist, der mit den Uplink-Daten assoziiert ist.

12. Verfahren nach Anspruch 8, welches weiterhin umfasst
ein Empfangen einer MAC-e PDU mit Uplink-Daten, Scheduling-Information und dem Header, falls sowohl Uplink-Daten als auch Scheduling-Information von der UE übertragen werden.

13. Basisstation (200, 300) zum Empfangen von Scheduling-Information in einem mobilen Kommunikationssystem, wobei die Basisstation aufweist:

einen Empfänger, ausgebildet zum Empfang eines Signals,

**dadurch gekennzeichnet, dass**

die Basisstation weiterhin aufweist:

eine Steuerungseinrichtung, ausgebildet zur Steuerung des Empfangs auf einem dedizierten Uplink-Kanal einer MAC-e PDU (Media Access Control-enhanced Protocol Data Unit) mit Scheduling-Information ohne einen Header mit einem Datenbeschreibungsidentifizierer, DDI, falls nur Scheduling-Information von einem Benutzerendgerät, UE, übertragen wird, und Erhalten der Scheduling-Information von der MAC-e PDU.

**14.** Basisstation nach Anspruch 13, ausgebildet zur Betätigung nach einem der Ansprüche 9 bis 12.


**Revendications**

**1.** Procédé de transmission d'informations de planification par un équipement d'utilisateur (210, 212, 214, 216, 302, 402), UE, dans un système de communication sans fil, le procédé consistant à:

configurer (910, 1010) d'une unité de données de protocole de commande d'accès au support amélioré, PDU MAC-e, comprenant des informations de planification sans en-tête comprenant un identifiant de description de données, DDI, si l'on ne transmet que des informations de planification; et
transmettre (920, 1020) la PDU MAC-e à une station de base sur un canal dédié de liaison montante.

**2.** Procédé selon la revendication 1, dans lequel un format de transport, TF, pour la PDU MAC-e est un format spécifique si l'on doit seulement transmettre des informations de planification.

**3.** Procédé selon la revendication 1, dans lequel les informations de planification comprennent au moins l'une des informations d'alimentation de transmission de liaison montante et des informations d'état de tampon de l'UE.

**4.** Procédé selon la revendication 1, dans lequel le DDI est une information d'identification pour identifier une chaîne logique associée aux données de liaison montante.

**5.** Procédé selon la revendication 1, comprenant en outre la configuration d'une PDU MAC-e comprenant des données de liaison montante, les informations de planification et l'en-tête, si l'on doit transmettre les données de liaison montante et les informations de planification.

**6.** Equipement d'utilisateur (210, 212, 214, 216, 302, 402), UE, pour la transmission d'informations de planification dans un système de communication sans fil, l'UE comprenant:

un émetteur configuré pour transmettre un signal, **caractérisé en ce que** ledit équipement utilisateur comprend en outre un système de commande configuré pour commander la configuration d'une unité de données de protocole de commande d'accès au support amélioré, MAC-e PDU, comprenant des informations de programmation sans en-tête comprenant un identifiant de description de données, DDI, si l'on doit seulement transmettre des informations de planification, et transmettre la MAC PDU-e à une station de base sur un canal dédié de liaison montante.

**7.** UE selon la revendication 6, prévu pour fonctionner selon l'une quelconque des revendications 2 à 5.

**8.** Procédé pour recevoir des informations de planification par une station de base (200, 300) dans un système de communication sans fil, le procédé consistant à: recevoir (1105), sur un canal dédié de liaison montante, d'une unité de données de protocole amélioré par contrôle d'accès au support, MAC-e PDU, comprenant des informations de programmation sans en - tête comprenant un identifiant de description de données, DDI, si l'on doit seulement transmettre les informations de planification à partir d'un équipement d'utilisateur, UE; et obtenir les informations de planification de la PDU MAC-e.

**9.** Procédé selon la revendication 8, dans lequel un format de transport, TF, pour la PDU MAC-e est un format spécifique si l'on doit seulement transmettre des informations de planification depuis l'UE.

**10.** Procédé selon la revendication 8, dans lequel les informations de planification comprennent au moins l'une des informations d'alimentation de transmission de liaison montante et des informations d'état de tampon de l'UE.

**11.** Procédé selon la revendication 8, dans lequel le DDI est une information d'identification pour identifier une chaîne logique associée aux données de liaison montante.

**12.** Procédé selon la revendication 8, comprenant en outre la configuration d'une PDU MAC-e comprenant des données de liaison montante, les informations de planification et l'en-tête, si l'on doit transmettre à la fois les données de liaison montante et les informations de planification.

**13.** Station de base (200, 300) permettant de recevoir des informations de planification dans un système de communication sans fil, la station de base comprenant:

un récepteur configuré pour recevoir un signal; **caractérisé en ce que** ladite station de base comprend en outre un système de commande configuré pour commander la réception, sur un canal dédié de liaison montante, d'une unité de données de protocole de commande d'accès au support amélioré, PDU MAC-e, comprenant des informations de planification sans en-tête comprenant un identifiant de description de données, DDI, si l'on doit seulement transmettre les informations de planification à partir d'un équipement utilisateur, UE et obtenir des informations de planification à partir de la PDU MAC-e.

**14.** Station de base selon la revendication 13, prévue pour fonctionner selon l'une quelconque des revendications 9 à 12.

FIG.1A

FIG.1B

FIG.2

310

E-DCH SETUP

312

REPORTING OF INFORMATION FOR
ESTIMATING UE DATA BUFFER STATUS, DATA RATE
REQUIRED BY UE, AND UL CHANNEL CONDITIONS

300

314

RATE INDICATION

302

Node B

316

UL PACKET DATA TRANSMISSION

UE

FIG.3

UE (402)

405a   405b   405c       407a   407b

| RLC 1 | RLC 2 | RLC 3 | | RLC 4 | RLC 5 |

410a — C/T mux          C/T mux — 410b

— 415

420

MAC-e/es

| E-DCH Control Block | Multiplexing and TSN setting block | — 430 |
| | HARQ entity | — 435 |

425

To Node B (437)

FIG.4

From UE (402)

440

**MAC-e**

| E-DCH Control Block | HARQ entity | — 450 |

445

| Demultiplexing unit | — 455 |

Node B (437)

RNC (462)

460

**MAC-es**

465 — | Reordering Queue | | Reordering Queue | — 470 |

475 — | Disassembly unit | | Disassembly unit | — 480 |

485 — | C/T demux | | C/T demux | — 487 |

| RLC 1 | | RLC 2 | | RLC 3 | | RLC 4 | | RLC 5 |

490a  490b  490c  492a  492b

FIG.5

Header part 1 (605)  Header part 2 (610)  Header part k (615)

| DDI | N | DDI | N | · · · | DDI = 111111 |

620  625

630

645  650

| MAC-e Header | MAC-e Payload | —640

655  657  660

| [1]: MAC-es PDU | [2]: MAC-es PDU | | [k]: MAC-e control SDU |

| TSN | RLC PDU 1 | · · · | RLC PDU N |

FIG.6

EP 3 030 032 B1

705                                710

| DDI = 111111 | MAC-e CONTROL SDU |

# FIG.7A

720

| MAC-e CONTROL SDU |

# FIG.7B

START

Initial rate request occurs or
MAC-e control information occurs and the
MAC-e control information is not to be
piggybacked ~805

Composing MAC-e PDU with only the
MAC-e control information ~810

Remove MAC-e header ~815

Transmitting MAC-e PDU ~820

END

# FIG.8

FIG.9

START

MAC-e PDU composition — 1005

1010

MAC-e PDU comprised with MAC-e control SDU only? — NO

YES

Remove MAC-e header — 1015

Transmitting the MAC-e PDU — 1025

Transmitting the MAC-e PDU — 1020

END

FIG.10

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003039270 A1

**Non-patent literature cited in the description**

- TSG-RAN WG2: ''CR to 25.321 Introduction of Enhanced Uplink. *3GPP,* 10 December 2004